# EUROPEAN PATENT SPECIFICATION

(11) **EP 3 635 307 B1**
(45) Date of publication and mention of the grant of the patent: **11.01.2023**
(21) Application number: 18734713.3
(22) Date of filing: 06.06.2018
(51) Int. Cl.: F25B 27/00, B60P 3/20, B60H 1/00, B60H 1/32, F25D 11/00, F25D 29/00

(54) **TRANSPORT REFRIGERATION UNIT WITH AN ENERGY STORAGE DEVICE**
TRANSPORTKÜHLEINHEIT MIT ENERGIESPEICHERVORRICHTUNG
UNITÉ DE RÉFRIGÉRATION DE TRANSPORT DOTÉE D'UN DISPOSITIF DE STOCKAGE D'ÉNERGIE

(30) Priority: 07.06.2017 US 201762516207 P
(43) Date of publication of application: 15.04.2020
(73) Proprietor: Carrier Corporation, Palm Beach Gardens, FL 33418 (US)
(72) Inventor: CHEN, Yu, Syracuse, New York 13221 (US); BURCHILL, Jeffrey, J., East Syracuse, New York 13057 (US); SAROKA, Mary, D., Syracuse, New York 13221 (US)
(74) Representative: Dehns
(86) International application number: PCT/US2018/036307
(87) International publication number: WO 2018/226862

(56) References cited:
- WO-A1-2008/153518
- WO-A1-2015/100398
- GB-A- 2 513 944
- US-B1- 9 630 614
- US-B2- 8 863 540

## Description

### BACKGROUND

The following description relates to transport refrigeration units and, more particularly, to transport refrigeration units with energy storage devices.

Environmental concerns and regulations are causing a shift in the design of transport refrigeration units (TRUs) that will make these devices quieter and cleaner in operation. That is, TRUs will have reduced noise levels associated with their operations and will be quieter as a result. Meanwhile, particulates will be eliminated from diesel engines or TRU refrigeration circuits will be reconfigured to use natural refrigerants as primary working fluids to provide for cleaner results. It has been found that an effective way to achieve both quieter and cleaner TRU operation is through a replacement of a diesel engine, which has traditionally been the TRU power source, with a non-diesel energy storage device such as a battery.

US 8863540 B2 discloses a HVAC system to be installed in a vehicle comprising a battery management controller, wherein the battery management controller is configured to supply power to a temperature control system from a combination of first and second power sources.

### BRIEF DESCRIPTION

According to one aspect of the invention, a transport refrigeration unit (TRU) system is provided and includes a TRU and an energy storage device (ESD). The TRU includes a TRU controller that is receptive of control data reflective of temperature profiles of one or more container compartments and which is configured to operate the TRU in accordance with the control data. The energy storage device (ESD) includes an ESD controller. The TRU and the ESD controllers are communicatively coupled. The ESD controller is configured to determine an energy need of the TRU to take an action in response the control data and the ESD, under control of the ESD controller, is configured to provide energy to the TRU in accordance with the energy need.

The ESD may include a battery, a housing for the battery and an external power input.

The housing for the battery may include an access panel and a coolant pathway.

The TRU may be supportively disposable on a side or front wall of a container and the ESD is supportively disposable on an underside of the container.

The TRU system may further include networks to which the TRU and the ESD are coupled and the networks include wiring routable along an exterior of a container.

The TRU system may further include networks to which the TRU and the ESD are coupled and at least one of the network include a wireless communication pathway.

The ESD controller may be further configured to identify an additional load, to determine that the additional load has an additional energy need and to control the ESD to provide energy to the additional load in accordance with the additional energy need.

The TRU system may be for use with a container pulled by a cab powered by a diesel engine, the energy storage device (ESD) may be separate from the diesel engine, and the TRU system may further comprise communication and power networks to which the TRU and the ESD are respectively coupled, the ESD controller being configured to determine from communications with the TRU controller via the communication network the energy need of the TRU to take an action in response to the control data and to control the ESD to provide energy to the TRU in accordance with the energy need via the power network.

The container may be formed to define an interior with a single compartment.

The container may be formed to define an interior with a proximal compartment and remote compartments and the TRU may be configured to control an environment within the proximal compartment and may include remote TRUs which are respectively configured to control respective environments within the remote compartments.

These and other advantages and features will become more apparent from the following description taken in conjunction with the drawings.

### BRIEF DESCRIPTION OF THE DRAWINGS

The subject-matter of the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view of a transport refrigeration unit (TRU) for use with a container formed to define a single compartment;
FIG. 2 is a side view of a TRU for use with a container formed to define multiple compartments;
FIG. 3 is a schematic diagram illustrating components of a TRU;
FIG. 4 is a schematic diagram illustrating components of an energy storage device (ESD);
FIG. 5 is a schematic diagram illustrating communications between a TRU and an ESD;
FIG. 6 is a schematic side view of a housing of an ESD;
FIG. 7 is a flow diagram illustrating a method of operating a TRU system for use with a container pulled by a cab powered by a diesel engine;
FIG. 8 is a schematic illustration of multiple containers in a warehoused condition;
FIG. 9 is a flow diagram illustrating a method of operating a TRU system;
FIG. 10 is a flow diagram illustrating a method of operating a TRU system;
FIG. 11 is a graphical display of various temperature set points and ±Δ temperature ranges;
FIG. 12 is a graphical display of various temperature set points and ±Δ temperature ranges;
FIG. 13 is a flow diagram illustrating a method of operating a TRU system; and
FIG. 14 is a flow diagram illustrating a method of operating a TRU system.

### DETAILED DESCRIPTION

As will be described below, a non-diesel energy storage device (ESD) is used to provide power to a transport refrigeration unit (TRU) for a trailer having a single compartment or multiple compartments. The ESD includes a controller which communicates with a controller of the TRU to determine an energy need of the TRU and controls the ESD to provide energy to the TRU in accordance with the energy need.

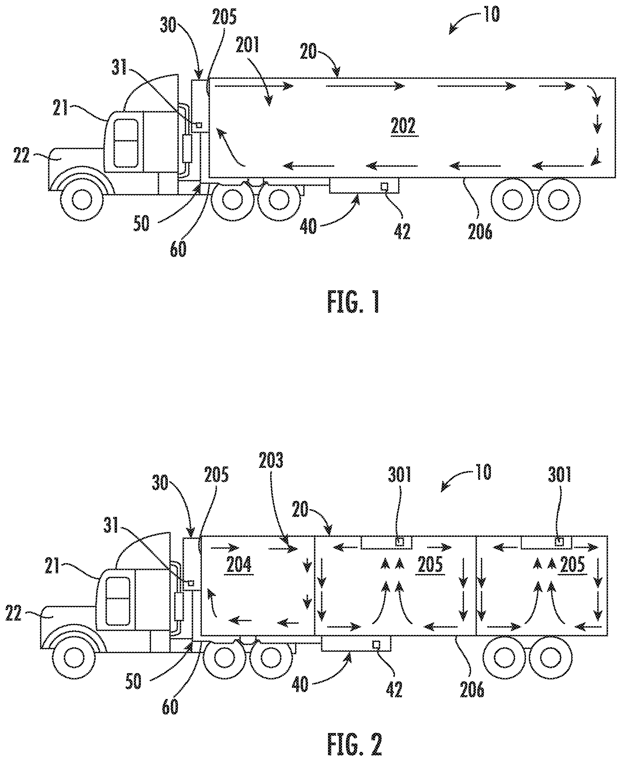

With reference to FIGS. 1-5, a TRU system 10 is provided for use with a container 20 that is pulled by a cab 21 that may be powered by a diesel engine 22 or any other type of fossil fuel burning engine. The TRU system 10 includes a TRU 30, an ESD 40, a communication network 50 and a power network 60. Both the TRU 30 and the ESD 40 are communicatively coupled to the communication network 50. Similarly, both the TRU 30 and the ESD 40 are communicatively coupled to the power network 60.

As shown in FIG. 1, the container 20 may be formed to define an interior 201 with a single compartment 202. In such a case, an interior temperature and other environmental conditions of the signal compartment are controllable by various operations of the TRU 30. Alternatively, as shown in FIG. 2, the container 20 may be formed to define an interior 203 with a proximal compartment 204 and remote compartments 205. In such cases, the interior temperatures and other environmental conditions of the proximal compartment are controllable by various operations of the TRU 30 while the interior temperatures and other environmental conditions of the proximal compartment are respectively controllable by various operations of remote TRUs 301. The remote TRUs may be operable dependently or independently of the TRU 30. In any case, the container 20 may further include a plurality of various sensors to measure and monitor environmental conditions therein. These sensors can be configured to transmit sensing data to the TRU 30 as part of a feedback control loop.

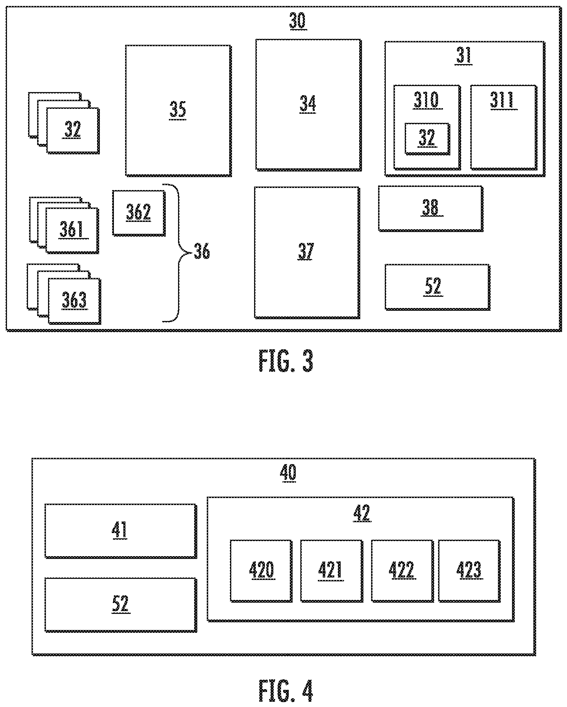

As shown in FIG. 3, the TRU 30 (and the remote TRUs 301, where applicable) includes a TRU controller 31 and various components 32 that are disposed and configured for controlling environmental conditions within the container 20 (e.g., a compressor, an evaporator, a fan, etc.). The TRU controller 31 may include a processor 310 and a memory unit 311 having executable instructions stored thereon, which, when executed, cause the processor 310 to at least be receptive of control data 33 along with sensing data from the sensors of the container 20. The control data 33 is configured to be reflective of temperature profiles of the single compartment 202 or the proximal compartment 204 and the remote compartments 205 in the container 20. When executed, the executable instructions may further cause the processor 310 to operate the various components 32 of the TRU 30 in accordance with the control data 33 so as to maintain respective container interior temperatures that are as close as possible to the temperature profiles of the one or more compartments in the container 20.

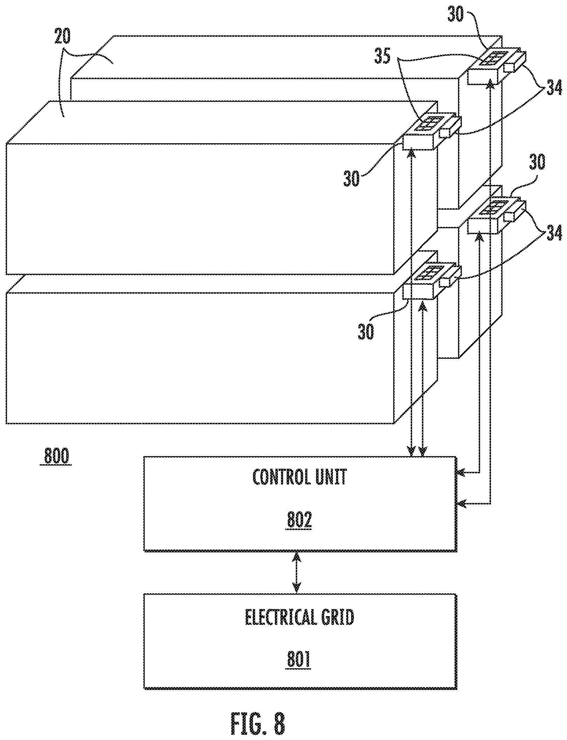

Each TRU 30 may further include a TRU battery pack 34 and a solar panel 35 (see FIG. 8). The TRU battery pack 34 is available for use by at least the TRU controller 31 for operating the various components 32 as need be on at least a limited basis. The solar panel 35 is disposed and configured to generate electrical power from collecting sunlight and may be disposed on an upper surface of the TRU 30.

As shown in FIG. 3, the TRU 30 may also include a plurality of sensors 36, an input/output (I/O) interface 37 and a timer 38. The plurality of sensors 36 may include compressor discharge and suction pressure and temperature sensors 361, evaporator leaving temperature sensors 362 and supply, return and ambient air temperature sensors 363. The I/O interface 37 is disposed such that the TRU controller 31 is receptive of readings from the plurality of sensors 36 via the I/O interface 37. The timer 38 is configured to timestamp the readings of the plurality of sensors 36. In addition, in these or other cases, the memory unit 311 may be configured to additionally store component identification data, which may be provided as model numbers for each of the various components 32, for example, the readings of the plurality of sensors 36, which is recordable as current condition data, and control data. The control data may include a temperature set point instruction as well as a ±Δ temperature range instruction.

As shown in FIGS. 1, 2 and 4, the ESD 40 is separate and distinct from the diesel engine 22 and may include a battery or, more particularly, a rechargeable battery 41 and an ESD controller 42. The ESD controller 42 may include a processor 420, a memory unit 421 having executable instructions stored thereon and an I/O interface 422 by which communications to and from the processor 420 proceed. When executed, the executable instructions cause the processor 420 to perform the following operations. For example, when executed, the executable instructions cause the processor 420 to determine an energy need of the TRU 30 to comply with the control data 33 from communications between the ESD controller 42 and the TRU controller 31 via the communication network 50. As another example, when executed, the executable instructions cause the processor 420 to control the ESD 40 to provide energy to the TRU 30 in accordance with the energy need via the power network 60.

The executable instructions, when executed, may also cause the processor 420 to identify an additional load 423 which may be coupled to or applied to the ESD 40, to determine that this additional load 423 has an additional energy need and to control the ESD 40 to provide energy to the additional load 423 in accordance with the additional energy need.

The ESD 40 will also allow for export of power to external devices other than the TRU 30. For example, external loads such as lights, lift gates, etc. could be powered from or by the ESD 40 under the control of the ESD controller 42 possibly in conjunction with the TRU controller 31. The TRU 30 may take priority for power use to maintain temperature controls unless otherwise specified.

As shown in FIGS. 1, 2 and 5, the TRU 30 may be supportively disposable on a side or front wall 205 of the container 20 and the ESD 40 may be supportively disposable on an underside 206 of the container 20. In these or other cases, the communication and power networks 50 and 60 may respectively include wiring 51 and 61 that are respectively routable along an exterior (i.e., along the underside 206 and the front wall 205) of the container 20. The wiring 51 and 61 will be sized, insulated and protected to communicate data with little or no interference or to conduct electrical power in various environmental conditions to which the TRU system 10 is exposed.

Alternatively, as shown in FIGS. 3 and 4, at least the communication network 50 may include a wireless communication pathway which is enabled by respective transmit/receive (T/R) modules 52 in the TRU controller 31 and the ESD controller 42. The power network 60 may also include at least a portion which is configured as a wireless network.

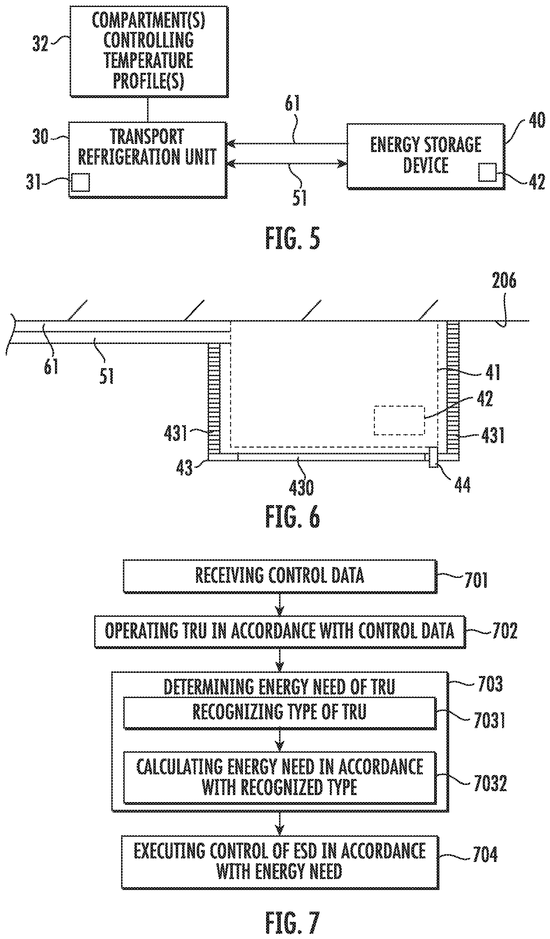

With reference to FIG. 6, the ESD 40 will be designed mechanically to withstand all vibration and shock seen in transport environments. This will include providing the ESD 40 with proper mounting that will prevent damage or inadvertent disconnection. To this end, the ESD 40 includes the battery or, more particularly, the rechargeable battery 41 and the ESD controller 42 and may also include a housing 43 for housing the rechargeable battery 41 and the ESD controller 42 as well as an external power input 44 by which current can be directed from an external source toward the rechargeable battery 41 for charging and recharging purposes. As shown in FIG. 6, the housing 43 is configured to protect the ESD 40 from environmental conditions, such as road debris, moisture and corrosion, and may include an access panel 430 by which a serviceman can access the ESD 40 for servicing or replacement and vents 431 for defining a coolant pathway along which airflow can be directed to cool the rechargeable battery 41.

The external source may be any one or more of an electrical grid (see, e.g., electrical grid 801 of FIG. 8), solar panels operably disposed on either containers 20 or TRUs 30 (see, e.g., the solar panels 35 of FIG. 8), another storage device or a power generation source. In any case, the external source will provide for supplemental power and/or restoration of power of the rechargeable battery 41. In addition, the external power input 44 may be connectable to the external power source by way of a receptacle. This receptacle may be user accessible, requires no tools to connect and may be protected against environmental conditions such as moisture, dust, etc.

With reference to FIG. 7, a method of operating the TRU system 10 is provided. As shown in FIG. 7, the method includes receiving, at the TRU controller 31, the control data 33 (block 701) and operating the TRU 30 in accordance with at least the control data 33 (block 702). The method further includes determining, at the ESD controller 42, an energy need of the TRU 30 to comply with the control data 33 from communications between the TRU and ESD controllers 31 and 42 via the communications network 50 (block 703). In addition, the method includes executing control of the ESD 40 by the ESD controller 42 to provide energy to the TRU 30 in accordance with the energy need via a power network 60.

The determining of block 703 may include recognizing, at the ESD controller 42, a type of the TRU 30 from identification information transmitted from the TRU 30 or the TRU controller 31 to the ESD controller 42 (block 7031) and calculating, at the ESD controller 42, the energy need of the TRU 30 in accordance with the recognized type of the TRU 30 (block 7032).

The description provided above relates to systems and methods of operating a TRU using a non-diesel ESD to thus provide for quieter and cleaner overall TRU operation as compared to what is otherwise possible with a traditional diesel engine power source. The description is applicable to any TRU (trailer or truck units) using any refrigeration working fluid (e.g., R-404a, R-452a, R-744, carbon dioxide, etc.).

As will be described below, a control scheme and power architecture is provided to allow a TRU 30 to comply or communicate with grid demand depending on a current load profile and TRU use.

With reference back to FIG. 3 and with additional reference to FIG. 8, a transport refrigeration unit (TRU) system 800 is provided. As separately shown in FIGS. 3 and 8, the TRU system 800 includes containers 20, TRUs 30, an electrical grid 801 and a control unit 802. Each respective TRU 30 is operably coupled to a corresponding one of the containers 20 and is configured substantially as described above. That is, each TRU 30 includes the TRU controller 31, the various components 32 that are configured to control an environment within an interior of the corresponding container 20, the TRU battery pack 34 that is configured to store energy for powering at least the various components 32 and the solar panel 35. The electrical grid 801 may have multiple generators and loads electrically coupled thereto such that those multiple generators and loads are in turn coupled to the TRUs 30.

The control unit 802 is communicative with the TRU controllers 31 of each of the TRUs 30 and with the electrical grid 801 and is configured to manage power supplies and demands between the TRU battery pack 34 of each of the TRUs 30 and the electrical grid 801. The control unit 802 may be remote from and communicatively coupled with the TRU controllers 31 or may be distributed throughout the TRU system 800 so as to be embodied in some or all of the TRU controllers 31.

In any case, a capacity of one or more of the TRU battery packs 34 is made available to the electrical grid 801 by the control unit 802. To this end, an availability of the capacity of the one or more TRU battery packs 34 is controlled by the control unit 802 in accordance with one or more of a loading schedule of each of the containers 20, a current loading or cooling condition of each of the containers 20 and current or predicted ambient conditions in and around each of the containers 20. That is, where the control unit 802 is embodied in some or all of the TRU controllers 31, the executable instructions of the memory unit 311 cause the processor 310 to determine at least one or more of a loading schedule of each of the containers 20, a current loading or cooling condition of each of the containers 20 and current or predicted ambient conditions in and around each of the containers 20 and to make a decision relating to an amount of power that can be provided to the electrical grid 801 from the TRU battery packs 34 without sacrificing performance accordingly.

For example, a TRU battery pack 34 of a TRU 30 of an empty container 20, which is stowed at a warehouse and which is not scheduled to be loaded for multiple days, can be employed to serve as a load leveling or energy arbitrage device for the electrical grid 801. As another example, where certain TRUs 30 are fitted with solar panels 35, the control unit 802 can prioritize the use of electrical power generated by those solar panels for battery charging purposes or grid sale based on at least one or more of a loading schedule of each of the containers 20, a current loading or cooling condition of each of the containers 20 and current or predicted ambient conditions in and around each of the containers 20.

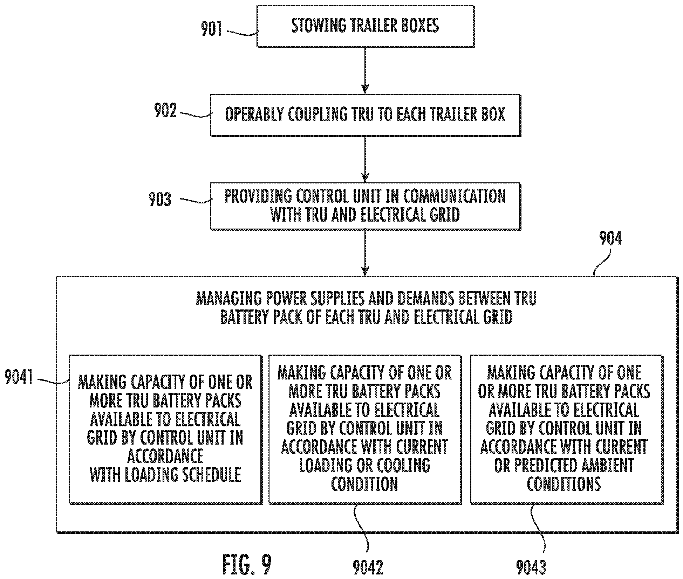

With reference to FIG. 9, a method of operating a transport refrigeration unit (TRU) system is provided. As shown in FIG. 9, the method includes stowing one or more containers 20 (block 901), operably coupling a TRU 30 to each of the one or more containers 20 with each TRU 30 including the various components 32 configured to control an environment within an interior of the corresponding container 20 and a TRU battery pack 34 (block 902), providing a control unit 802 in communication with the TRU 30 and an electrical grid 801 (block 903) and managing power supplies and demands between the TRU battery pack 34 of each TRU 30 and the electrical grid 801 (block 904). Here, the managing of block 904 may include making a capacity of one or more TRU battery packs 34 available to the electrical grid 801 by the control unit 802 in accordance with one or more of a loading schedule (block 9041), a current loading or cooling condition (block 9042) and current or predicted ambient conditions (block 9043).

The description provided herein of smart grid integration allows for economic rebates and utility rebates. Smart communication and predictive load requirements can inform warehouse customers with regards to their expected peak energy requirements. Solar Panel fitted TRU's can sell energy during peak production hours over prioritizing battery and unit charging.

As will be described below, systems and methods of TRU control are provided for a non-diesel ESD, such as a battery pack, as determined by a controlling temperature profile of container cooling compartments. Here, component refrigeration controls are shifted from the traditional TRU controller to the ESD controller by setting refrigeration component operating settings in the ESD controller with consideration given to both the power needed to operate the various components of the TRU and the proper settings to meet TRU refrigeration needs as set by the controlling temperature profile(s). Once the settings are known, the information is passed back to the TRU controller and the TRU operates accordingly.

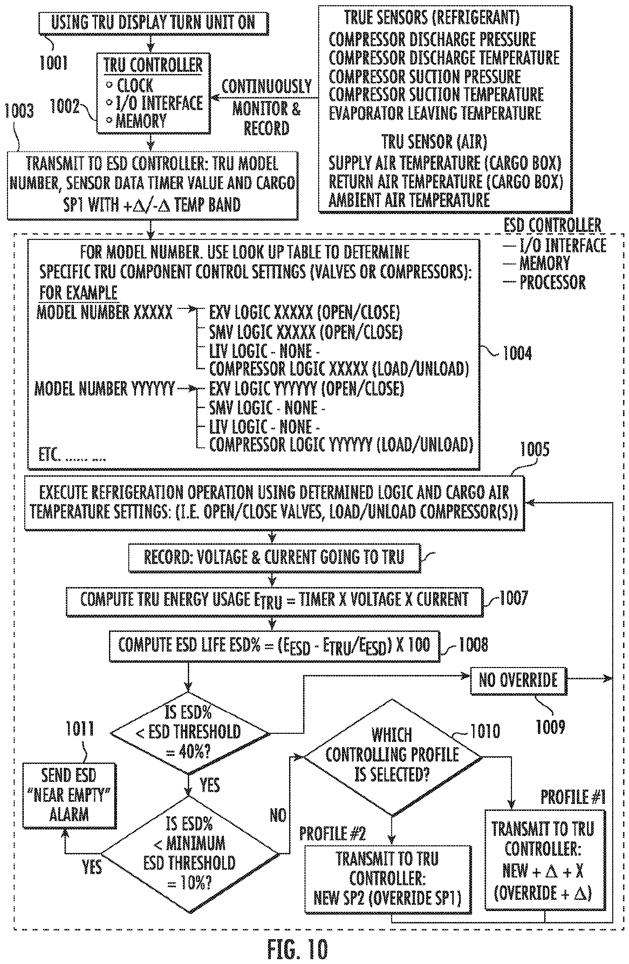

Thus, with reference to FIGS. 10-12, a method of operating a transport refrigeration unit (TRU) system is provided and includes starting a TRU 30 such that the various components 32 control an environment of an interior of a container 20 with the TRU controller 31 controlling the various components 32 in accordance with component operating settings (block 1001). Subsequently, the TRU controller 31 collects current condition data that is reflective of current conditions of the interior of the container 20 from the plurality of sensors 36 (block 1002) and, with the TRU and the ESD controllers 31 and 42 being established, the TRU controller 31 transmits identification data identifying the various components 32, the current condition data and control data that is reflective of a temperature profile of the interior of the container 20 to the ESD controller 42 (block 1003). The ESD controller 42 then looks up component control settings of each of the various components 32 in accordance with the identification data (block 1004). At this point, the ESD controller 42 determines the component operating settings in accordance with the component control settings associated with the identification data as well as the current condition and control data and issues the component operating settings to the TRU controller 31 (block 1005).

The identification data may include model numbers of the various components 32, the current condition data may include compressor discharge and suction pressure and temperatures, evaporator temperatures and supply, return and ambient air temperatures and the control data may include a temperature set point instruction with a ±Δ temperature band instruction.

Once the ESD controller 42 issues the component operating settings to the TRU controller 31, the ESD controller 42 calculates an energy need of the TRU 30 to operate according to the component operating settings and controls the ESD 40 to provide energy to the TRU 30 in accordance with the energy need while monitoring this energy usage by the TRU 30 by, for example, recording voltage and current supplied by the ESD 40 to the TRU 30 (block 1006). The ESD controller 42 then computes TRU energy usage over time (block 1007) and calculates ESD life in accordance with the monitored energy usage (block 1008).

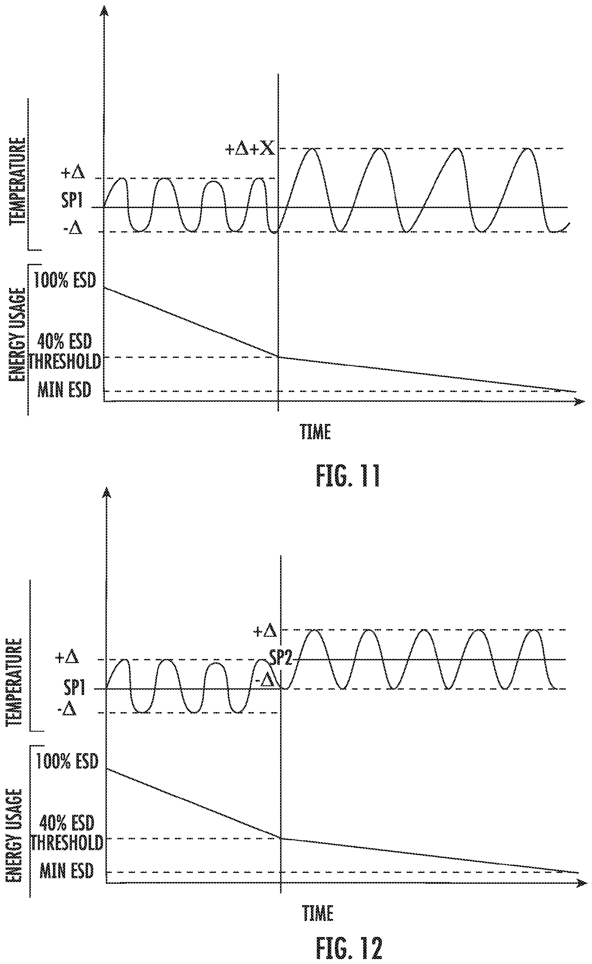

The ESD controller 42 then takes an action based on the calculated ESD life. Such action may include making a decision not to override the control data in an event the ESD life is above a first threshold (block 1009), making a decision to override the control data in an event the ESD life is between a second and the first threshold (block 1010) and/or making a decision to issue an alarm in an event the ESD life is below the second threshold (block 1011). Here, in an event the ESD life is between a second and the first threshold and in an event the control data is consistent with a first control setting, the making of the decision to override the control data comprises changing a temperature set point value (see, e.g., the changing of SP1 to SP2 in FIG. 12). By contrast, in an event the ESD life is between a second and the first threshold and in an event the control data is consistent with a second control setting, the making of the decision to override the control data comprises changing a set point and range values (see, e.g., the changing of the ±Δ temperature range value in FIG. 11 with or without an additional temperature set point change).

The description provided above relates to TRU operation of a non-diesel energy source that results in both quieter and cleaner overall TRU operations as compared to a traditional diesel power source and can be used with any TRU using any refrigeration working fluid.

As will be described below, methods of TRU energy control are provided for a non-diesel ESD and are determined by controlling temperature profiles of container cooling compartments.

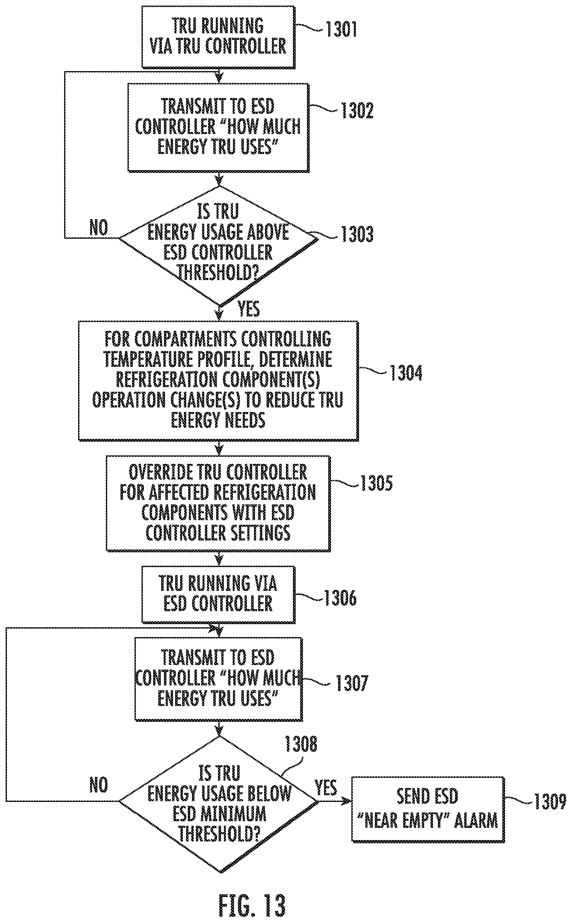

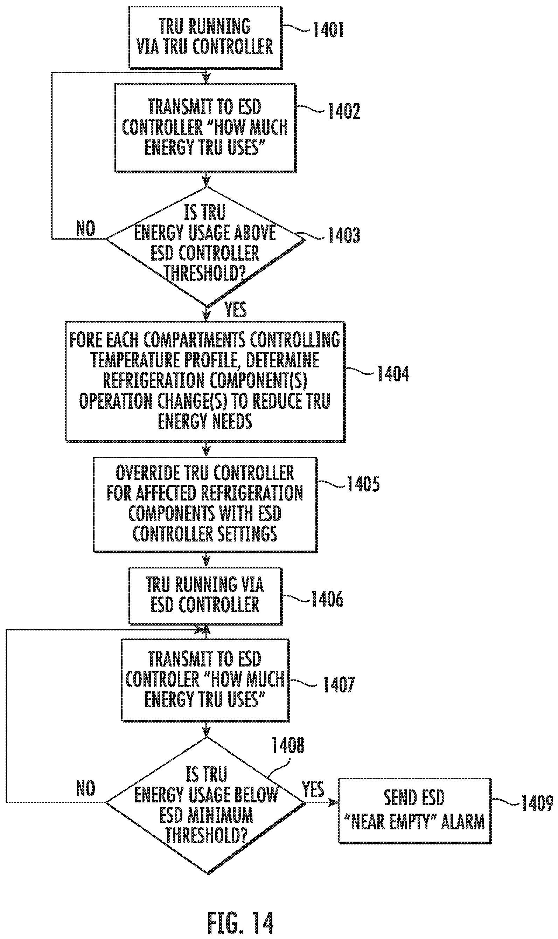

With reference to FIGS. 13 and 14, the methods include controlling the various components 32 to control an environment in a single compartment interior as shown in FIG. 13 or to control environments in multiple compartment interiors as shown in FIG. 14 (blocks 1301 and 1401) and monitoring energy usage by the components being controlled in accordance with the initial control settings for transmission to the ESD controller 42 (blocks 1302 and 1402). The methods thus include determining whether the energy usage is above a threshold (blocks 1303 and 1403) and reverting to blocks 1302 and 1402 if not. On the other hand, in an event the energy usage is above the threshold, the methods further include identify operational changes for one or more of the components or for one or more of the components of each of the multiple compartment interiors to reduce the energy usage (blocks 1304 and 1404), overriding the initial control settings of the one or more of the components with new control settings (blocks 1305 and 1405) and operating the components in accordance with the new control settings (blocks 1306 and 1406).

As shown in FIGS. 13 and 14, the methods further include monitoring energy usage by the components being controlled in accordance with the new control settings for transmission to the ESD controller 42 (blocks 1307 and 1407), determining whether the energy usage is below a minimum threshold (blocks 1308 and 1408) and issuing an alarm in an event the energy usage is below the minimum threshold (blocks 1309 and 1409).

The description provided above relates to TRU operation of a non-diesel energy source that results in both quieter and cleaner overall TRU operations as compared to a traditional diesel power source and can be used with any TRU using any refrigeration working fluid.

The invention is not to be seen as limited by the foregoing description, but is only limited by the scope of the appended claims.

## Claims

1. A transport refrigeration unit (TRU) system (10), comprising:
a TRU (30) comprising a TRU controller (31) receptive of control data (33) reflective of temperature profiles of one or more container compartments and configured to operate the TRU in accordance with the control data; and
a non-diesel energy storage device (ESD) (40) comprising an ESD controller (42),
the TRU and the ESD controllers being communicatively coupled,
**characterised by** the ESD controller being configured to determine an energy need of the TRU to take an action in response to the control data, and
the ESD, under control of the ESD controller, being configured to provide energy to the TRU in accordance with the energy need.

2. The TRU system according to claim 1, wherein the ESD (40) comprises:
a battery (41);
a housing (43) for the battery; and
an external power input (44),
optionally wherein the housing for the battery comprises an access panel (430) and a coolant pathway.

3. The TRU system according to claim 1, wherein:
the TRU (30) is supportively disposable on a side or front wall (205) of a container (20), and
the ESD (40) is supportively disposable on an underside (206) of the container.

4. The TRU system according to claim 1, further comprising networks (50, 60) to which the TRU (30) and the ESD (40) are coupled, wherein the networks comprise wiring (51, 61) routable along an exterior of a container.

5. The TRU system according to claim 1, further comprising networks (50, 60) to which the TRU (30) and the ESD (40) are coupled, wherein at least one of the network (50) comprises a wireless communication pathway.

6. The TRU system according to claim 1, wherein the ESD controller (42) is further configured to identify an additional load (423), to determine that the additional load has an additional energy need and to control the ESD (40) to provide energy to the additional load in accordance with the additional energy need.

7. The TRU system according to claim 1, for use with a container (20) pulled by a cab (21) powered by a diesel engine (22), wherein the energy storage device (ESD) (40) is separate from the diesel engine, the TRU system further comprising:
communication and power networks (50, 60) to which the TRU (30) and the ESD are respectively coupled,
the ESD controller (42) being configured to determine from communications with the TRU controller (31) via the communication network (50) the energy need of the TRU to take an action in response to the control data (33) and to control the ESD to provide energy to the TRU in accordance with the energy need via the power network (60).

8. The TRU system according to claim 7, wherein the container (20) is formed to define an interior (201) with a single compartment (202).

9. The TRU system according to claim 7, wherein:
the container (20) is formed to define an interior (203) with a proximal compartment (204) and remote compartments (205), and
the TRU (30) is configured to control an environment within the proximal compartment and comprises remote TRUs (301) which are respectively configured to control respective environments within the remote compartments.

10. The TRU system according to claim 7, wherein the ESD (40) comprises:
a battery (41);
a housing (43) for the battery and the ESD controller (42); and
an external power input (44), optionally wherein the housing comprises an access panel (430) and a coolant pathway.

11. The TRU system according to claim 7, wherein:
the TRU (30) is supportively disposable on a side or front wall (205) of the container (20), and
the ESD (40) is supportively disposable on an underside (206) of the container.

12. The TRU system according to claim 7, wherein the communication and power networks (50, 60) respectively comprise wiring (51, 61) routable along an exterior of the container (20).

13. The TRU system according to claim 7, wherein at least the communication network (50) comprises a wireless communication pathway.

14. The TRU system according to claim 7, wherein the ESD controller (42) is further configured to identify an additional load (423), to determine that the additional load has an additional energy need and to control the ESD (40) to provide energy to the additional load in accordance with the additional energy need.

## Patentansprüche

1. Transportkühleinheits- (TRU) System (10), umfassend:
eine TRU (30), die eine TRU-Steuereinheit (31) umfasst, die Steuerdaten (33) empfängt, die Temperaturprofile eines oder mehrerer Behälterabteile widerspiegeln, und dazu ausgelegt ist, die TRU in Übereinstimmung mit den Steuerdaten zu betreiben; und
eine Nichtdiesel-Energiespeichervorrichtung (ESD) (40), die eine ESD-Steuereinheit (42) umfasst,
wobei die TRU und die ESD-Steuereinheiten kommunikativ verbunden sind,
**dadurch gekennzeichnet, dass** die ESD-Steuereinheit dazu ausgelegt ist, einen Energiebedarf der TRU zu ermitteln, um eine Maßnahme in Reaktion auf die Steuerdaten vorzunehmen, und
die ESD, unter Steuerung der ESD-Steuereinheit, dazu ausgelegt ist, Energie an die TRU in Übereinstimmung mit dem Energiebedarf bereitzustellen.

2. TRU-System nach Anspruch 1, wobei die ESD (40) umfasst:
eine Batterie (41);
ein Gehäuse (43) für die Batterie; und
eine externe Leistungseinspeisung (44),
wobei das Gehäuse für die Batterie optional ein Zugriffspanel (430) und einen Kältemittelleitungspfad umfasst.

3. TRU-System nach Anspruch 1, wobei:
die TRU (30) an einer Seiten- oder Vorderwand (205) eines Behälters (20) stützend zur Verfügung steht, und
die ESD (40) an einer Unterseite (206) des Behälters stützend zur Verfügung steht.

4. TRU-System nach Anspruch 1, weiter umfassend Netzwerke (50, 60), mit denen die TRU (30) und die ESD (40) verbunden sind, wobei die Netzwerke Verdrahtung (51, 61) umfassen, die entlang einer Außenseite eines Behälters zu führen ist.

5. TRU-System nach Anspruch 1, weiter umfassend Netzwerke (50, 60) mit denen die TRU (30) und die ESD (40) verbunden sind, wobei zumindest eines des Netzwerks (50) einen drahtlosen Kommunikationsleitungspfad umfasst.

6. TRU-System nach Anspruch 1, wobei die ESD-Steuereinheit (42) weiter dazu ausgelegt ist, eine zusätzliche Last (423) zu identifizieren, um zu ermitteln, dass die zusätzliche Last einen zusätzlichen Energiebedarf aufweist, und die ESD (40) zu steuern, Energie an die zusätzliche Last in Übereinstimmung mit dem zusätzlichen Energiebedarf bereitzustellen.

7. TRU-System nach Anspruch 1 zur Verwendung mit einem Behälter (20), der von einem von einem Dieselmotor (22) angetriebenen Führerhaus (21) gezogen wird, wobei die Energiespeichervorrichtung (ESD) (40) von dem Dieselmotor getrennt ist, das TRU-System weiter umfassend:
Kommunikations- und Leistungsnetzwerke (50, 60), mit denen die TRU (30) beziehungsweise die ESD verbunden sind,
wobei die ESD-Steuereinheit (42) dazu ausgelegt ist, aus Kommunikationen mit der TRU-Steuereinheit (31) über das Kommunikationsnetzwerk (50) den Energiebedarf der TRU zu ermitteln, um eine Maßnahme in Reaktion auf die Steuerdaten (33) vorzunehmen und die ESD zu steuern, Energie an die TRU in Übereinstimmung mit dem Energiebedarf über das Leistungsnetzwerk (60) bereitzustellen.

8. TRU-System nach Anspruch 7, wobei der Behälter (20) gebildet ist, um einen Innenraum (201) mit einem einzelnen Abteil (202) zu definieren.

9. TRU-System nach Anspruch 7, wobei:
der Behälter (20) gebildet ist, einen Innenraum (203) mit einem proximalen Abteil (204) und fernen Abteilen (205) zu definieren, und
die TRU (30) dazu ausgelegt ist, eine Umgebung innerhalb des proximalen Abteils zu steuern, und die ferne TRUs (301) umfasst, die jeweils dazu ausgelegt sind, jeweilige Umgebungen innerhalb der fernen Abteile zu steuern.

10. TRU-System nach Anspruch 7, wobei die ESD (40) umfasst:
eine Batterie (41);
ein Gehäuse (43) für die Batterie und die ESD-Steuereinheit (42); und
eine externe Leistungseinspeisung (44), wobei das Gehäuse optional ein Zugriffspanel (430) und einen Kältemittelleitungspfad umfasst.

11. TRU-System nach Anspruch 7, wobei:
die TRU (30) an einer Seiten- oder Vorderwand (205) des Behälters (20) stützend zur Verfügung steht, und
die ESD (40) an einer Unterseite (206) des Behälters stützend zur Verfügung steht.

12. TRU-System nach Anspruch 7, wobei die Kommunikations- und Leistungsnetzwerke (50, 60) jeweils Verdrahtung (51, 61) umfassen, die entlang eines Außenseite des Behälters (20) zu führen ist.

13. TRU-System nach Anspruch 7, wobei zumindest das Kommunikationsnetzwerk (50) einen drahtlosen Kommunikationsleitungspfad umfasst.

14. TRU-System nach Anspruch 7, wobei die ESD-Steuereinheit (42) weiter dazu ausgelegt ist, eine zusätzliche Last (423) zu identifizieren, um zu ermitteln, dass die zusätzliche Last einen zusätzlichen Energiebedarf aufweist, und die ESD (40) zu steuern, Energie an die zusätzliche Last in Übereinstimmung mit dem zusätzlichen Energiebedarf bereitzustellen.

## Revendications

1. Système d'unité de réfrigération de transport (TRU) (10), comprenant :
une TRU (30) comprenant un dispositif de commande de TRU (31) recevant des données de commande (33) reflétant des profils de température d'un ou plusieurs compartiments de conteneur et configuré pour faire fonctionner la TRU conformément aux données de commande ; et
un dispositif de stockage d'énergie non diesel (ESD) (40) comprenant un dispositif de commande d'ESD (42),
les dispositifs de commande de TRU et d'ESD étant couplés en communication,
**caractérisé en ce que** le dispositif de commande d'ESD est configuré pour déterminer un besoin d'énergie de la TRU pour entreprendre une action en réponse aux données de commande, et
l'ESD, sous la commande du dispositif de commande d'ESD, étant configuré pour fournir de l'énergie à la TRU conformément au besoin d'énergie.

2. Système de TRU selon la revendication 1, dans lequel l'ESD (40) comprend :
une batterie (41) ;
un logement (43) pour la batterie ; et
une entrée d'alimentation externe (44),
facultativement dans lequel le boîtier pour la batterie comprend un panneau d'accès (430) et un trajet de liquide de refroidissement.

3. Système de TRU selon la revendication 1, dans lequel :
la TRU (30) peut être disposée de manière supportée sur une paroi latérale ou frontale (205) d'un conteneur (20), et
l'ESD (40) peut être disposé de manière supportée sur une face inférieure (206) du conteneur.

4. Système de TRU selon la revendication 1, comprenant en outre des réseaux (50, 60) auxquels la TRU (30) et l'ESD (40) sont couplés, dans lequel les réseaux comprennent un câblage (51, 61) pouvant être routé le long d'un extérieur d'un conteneur.

5. Système de TRU selon la revendication 1, comprenant en outre des réseaux (50, 60) auxquels la TRU (30) et l'ESD (40) sont couplés, dans lequel au moins un des réseaux (50) comprend un trajet de communication sans fil.

6. Système de TRU selon la revendication 1, dans lequel le dispositif de commande d'ESD (42) est en outre configuré pour identifier une charge supplémentaire (423), pour déterminer que la charge supplémentaire présente un besoin d'énergie supplémentaire et pour commander l'ESD (40) afin de fournir de l'énergie à la charge supplémentaire en fonction du besoin d'énergie supplémentaire.

7. Système de TRU selon la revendication 1, à utiliser avec un conteneur (20) tiré par une cabine (21) alimentée en puissance par un moteur diesel (22), dans lequel le dispositif de stockage d'énergie (ESD) (40) est séparé du moteur diesel, le système de TRU comprenant en outre :
des réseaux de communication et d'alimentation (50, 60) auxquels la TRU (30) et l'ESD sont respectivement couplés,
le dispositif de commande d'ESD (42) étant configuré pour déterminer à partir de communications avec le dispositif de commande de TRU (31) via le réseau de communication (50) le besoin d'énergie de la TRU afin d'entreprendre une action en réponse aux données de commande (33) et pour commander l'ESD afin de fournir de l'énergie à la TRU conformément au besoin d'énergie via le réseau d'alimentation (60).

8. Système de TRU selon la revendication 7, dans lequel le conteneur (20) est formé pour définir un intérieur (201) avec un compartiment unique (202).

9. Système de TRU selon la revendication 7, dans lequel :
le conteneur (20) est formé pour définir un intérieur (203) avec un compartiment proximal (204) et des compartiments distants (205), et
la TRU (30) est configurée pour commander un environnement à l'intérieur du compartiment proximal et comprend des TRU distantes (301) qui sont respectivement configurées pour commander des environnements respectifs à l'intérieur des compartiments distants.

10. Système de TRU selon la revendication 7, dans lequel l'ESD (40) comprend :
une batterie (41) ;
un logement (43) pour la batterie et le dispositif de commande d'ESD (42) ; et
une entrée d'alimentation externe (44), facultativement dans lequel le logement comprend un panneau d'accès (430) et un trajet de liquide de refroidissement.

11. Système de TRU selon la revendication 7, dans lequel :
la TRU (30) peut être disposée de manière supportée sur une paroi latérale ou frontale (205) du conteneur (20), et
l'ESD (40) peut être disposé de manière supportée sur une face inférieure (206) du conteneur.

12. Système de TRU selon la revendication 7, dans lequel les réseaux de communication et d'alimentation (50, 60) comprennent respectivement un câblage (51, 61) pouvant être routé le long d'un extérieur du conteneur (20).

13. Système de TRU selon la revendication 7, dans lequel au moins le réseau de communication (50) comprend un trajet de communication sans fil.

14. Système de TRU selon la revendication 7, dans lequel le dispositif de commande d'ESD (42) est en outre configuré pour identifier une charge supplémentaire (423), pour déterminer que la charge supplémentaire présente un besoin d'énergie supplémentaire et pour commander l'ESD (40) afin de fournir de l'énergie à la charge supplémentaire en fonction du besoin d'énergie supplémentaire.
